# FASCICULE DE BREVET EUROPEEN

(11) **EP 2 959 318 B1**
(45) Date de publication et mention de la délivrance du brevet: **11.01.2017**
(21) Numéro de dépôt: 14706021.4
(22) Date de dépôt: 21.02.2014
(51) Int. Cl.: G01T 7/00

(54) **PROCEDE ET DISPOSITIF DE DETERMINATION DE L'ACTIVITE RADIOLOGIQUE DEPOSEE DANS UN FOND SOUS MARIN**
VERFAHREN UND VORRICHTUNG ZUR BESTIMMUNG DER RADIOLOGISCHEN AKTIVITÄT AUF EINEM MEERESBODEN
METHOD AND DEVICE FOR DETERMINING THE RADIOLOGICAL ACTIVITY DEPOSITED IN A SEA BED

(30) Priorité: 25.02.2013 FR 1351642
(43) Date de publication de la demande: 30.12.2015
(73) Titulaire: AREVA NC, 92400 Courbevoie (FR)
(72) Inventeur: MESSALIER, Marc, F-30200 Saint Michel d'Euzet (FR)
(74) Mandataire: Brevalex
(86) Numéro de dépôt international: PCT/EP2014/053386
(87) Numéro de publication internationale: WO 2014/128238

(56) Documents cités:
- US-A- 4 814 608
- US-A- 5 218 208
- US-A1- 2011 077 799
- US-B1- 6 484 660

## Description

### DOMAINE TECHNIQUE ET ART ANTÉRIEUR

L'invention concerne un procédé et un système en vue de la détermination de l'activité radiologique déposée dans des sédiments du fond d'un milieu aqueux, par exemple au fond de lacs, ou de la mer ou de rivières, mais aussi au fond d'un estuaire, ou encore d'une piscine de stockage sur un site nucléaire.

Par exemple, on peut chercher à déterminer l'activité radiologique déposée dans les sédiments du fond d'un tel milieu aqueux, et d'en établir le spectre gamma.

En effet, dans le cas d'un accident nucléaire majeur, les radionucléides s'échappent du réacteur et se combinent à des éléments naturels de type "glaise" en formant des complexes relativement stables dans le temps. Ce phénomène est particulièrement important dans le cas des Cs 134 et 137 qui, selon le scénario accidentel, deviennent en général les seuls radioéléments significatifs au bout des quelques mois suivant l'accident. Les particules de glaise sont naturellement drainées par l'eau lors des intempéries et se retrouvent donc concentrées dans les zones sédimentaires des lacs, rivières et estuaires recevant les affluents charriant l'eau contaminée

Cette contamination est difficile voire impossible à mesurer sur des profondeurs dépassant quelques mètres et/ou dans des eaux troubles avec des moyens usuels, par exemple du type mettant en oeuvre une perche munie à une de ses extrémités d'un détecteur gamma.

Pour réaliser cette mesure, on est confronté à plusieurs problèmes techniques.

Un premier problème est de réaliser des mesures à des profondeurs supérieures à 5 m (et jusqu'à 1000 m environ). On cherche donc à limiter l'atténuation liée à l'épaisseur d'eau entre la sonde et le détecteur afin d'offrir des seuils et des limites de détections compatibles avec des temps de comptage réalistes (de l'ordre de la centaine de secondes par point de mesure) avec des précisions statistiques satisfaisantes.

US2011/0077799 divulgue néanmoins un dispositif pour la mesure de l'activité radiologique dans un fond sous-marin, comportant un étui étanche pour un détecteur radiologique.

Un autre problème est de pouvoir positionner la sonde, par rapport au fond, en évitant de bouger les sédiments, et ce afin d'éviter l'erreur de mesure liée à la remise en suspension des sédiments dans l'eau générant un comptage parasite.

Encore un autre problème est de pouvoir s'assurer de la précision et de la reproductibilité du positionnement des points de mesures, de préférence au mètre près, afin de pouvoir localiser les surfaces à traiter et suivre l'évolution des sédiments sur le fond.

On cherche donc un nouveau dispositif et un nouveau procédé de mesure, permettant de réaliser une détermination ou une estimation de l'activité radiologique déposée dans des sédiments du fond d'un milieu aqueux.

L'objectif de l'invention est également d'assurer la détection de tout radio-élément émetteur gamma.

De préférence, un tel dispositif et un tel procédé permet de résoudre tout ou partie des problèmes ci-dessus.

### EXPOSÉ DE L'INVENTION

L'invention concerne d'abord un dispositif de mesure de l'activité radiologique dans un fond sous-marin, comportant un étui étanche pour un détecteur radiologique, des moyens formant un volume fermé, par exemple un cône tronqué, contenant un matériau apte à être traversé par un rayonnement à mesurer par ledit détecteur radiologique, ce volume étant muni d'une face d'entrée du rayonnement à mesurer, ce volume, ou ce cône tronqué, étant assemblé audit étui de manière étanche.

Dans le cas du tronc de cône, celui-ci comporte une petite base et une grande base, cette dernière formant ladite face d'entrée du rayonnement à mesurer. La petite base est disposée du côté de l'étui, la grande base étant destinée à être disposée en regard du fond sous marin.

La face d'entrée du détecteur est de préférence située en dehors du volume du tronc de cône, du côté de, ou au-dessus de, sa petite base.

Le détecteur peut être monté verticalement ou horizontalement.

Ledit matériau, apte à être traversé par un rayonnement à mesurer, peut être un gaz (par exemple de l'air) ou un matériau solide de faible densité qui emprisonne ledit gaz. C'est par exemple une mousse de polyuréthane.

La face d'entrée du rayonnement, par exemple la grande base du cône tronqué, est de préférence fermée, par exemple par une plaque, par exemple encore du type qui comporte des moyens, définissant, à travers la plaque, une ouverture ou une zone centrale ; ces moyens comportent par exemple, ou ladite zone est définie par, une portion tubulaire disposée sensiblement perpendiculairement à la grande base ou à ladite face d'entrée, des ailettes s'étendant radialement en reliant la portion tubulaire et ladite plaque ou la grande base.

De préférence, l'angle du cône tronqué est compris entre 15° et 75°, il est par exemple de 60°.

L'étui peut s'étendre le long d'un axe sensiblement perpendiculaire à l'axe de révolution du cône tronqué.

L'invention concerne également un système pour la mesure de l'activité radiologique dans un fond d'un milieu aqueux, comportant :
- un châssis destiné à être immergé dans ledit milieu aqueux,
- un dispositif de mesure tel que décrit ci-dessus.

Avantageusement, le système est équipé de moyens d'éclairage du milieu aqueux et du fond de ce milieu aqueux.

Le châssis comporte de préférence des parois latérales ajourées. Il peut comporter des moyens pour positionner le système sur le fond d'un milieu aqueux.

Le châssis peut comporter des moyens pour fixer, de manière amovible, le dispositif de mesure par rapport au châssis.

Des moyens, par exemple de type sonar, peuvent être prévus pour estimer une position du châssis par rapport au fond marin.

Des moyens peuvent être prévus pour établir une carte de l'activité radiologique du fond sous marin.

Au moins une caméra peut permettre de filmer le milieu aqueux et le fond de ce milieu aqueux.

Le châssis peut comporter des moyens pour déplacer le dispositif de mesure par rapport au châssis.

Un tel système peut être associé, ou comporter, un véhicule télécommandé, pour permettre un déplacement du châssis et des moyens de détection en milieu aqueux. Ce véhicule peut en outre comporter lui-même des moyens d'éclairage et/ou au moins une caméra.

L'invention concerne également un procédé de mesure de l'activité radiologique dans un fond d'un milieu aqueux, comportant :
- l'introduction, dans le milieu aqueux, d'un dispositif ou d'un système tels que décrits ci-dessus,
- la mesure de l'activité radiologique à l'aide du dispositif de mesure, la grande base du cône tronqué étant approchée du fond du milieu aqueux.

Le procédé peut en outre comprendre la réalisation de la carte de l'activité radiologique du fond du milieu aqueux.

Le système peut être introduit de sorte que la grande base du cône tronqué soit approchée à moins de 1 m du fond du milieu aqueux.

Le fond du milieu aqueux peut être disposé à une profondeur comprise entre 5 m et 100 m, ou supérieure à 100 m.

Le milieu aqueux peut être un lac, ou une mer ou une rivière, ou un estuaire, ou encore une piscine de stockage sur un site nucléaire, ou une zones de retenue sédimentaire.

### BRÈVE DESCRIPTION DES DESSINS

- Les figures 1A et 1B représentent schématiquement un système de mesure selon l'invention,
- la figure 2 représente un système de réception de données et des moyens de traitement de données mesurées à l'aide d'un dispositif selon l'invention,
- la figure 3 est un exemple d'une cartographie obtenue avec un dispositif selon l'invention,
- les figures 4A et 4B représentent schématiquement une sonde introduite dans un milieu aqueux et munie d'un cylindre (figure 4A) ou d'un cône d'air (figure 4B),
- les figures 5A et 5B représentent un mode de réalisation d'un châssis pour un système selon l'invention,
- les figures 6A et 6B représentent des vues, respectivement en perspective et en coupe, d'un dispositif de mesure selon l'invention,
- la figure 7 représente la grande base d'un tronc de cône mis en oeuvre dans un dispositif selon l'invention,
- les figures 8A-8B représentent différentes vues d'un système selon l'invention, fixé sur un véhicule sous-marin télécommandé.

### EXPOSÉ DÉTAILLÉ DE MODES DE RÉALISATION PARTICULIERS

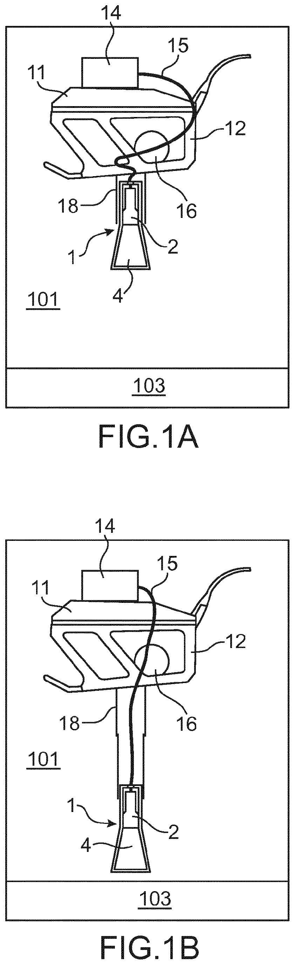

Les figures 1A et 1B représentent schématiquement un système pour la mesure de l'activité radiologique dans un fond 103 d'un milieu aqueux 101.

Ce système comporte un châssis 12 qui permet d'amener, à proximité du fond 103, une sonde 1 de mesure de l'activité radiologique.

Ce dispositif de mesure 1 comporte un détecteur radiologique 2 auquel est associé un volume 4, rempli d'un gaz tel que de l'air, qui va permettre de s'affranchir de la majeure partie de l'atténuation liée à la présence de l'eau du milieu aqueux 101. Un autre gaz que l'air peut être utilisé. On peut aussi, en variante, utiliser un matériau solide de faible densité, de préférence de masse volumique apparente inférieure à 0,1 g.cm⁻³, tel qu'une mousse de polyuréthane emprisonnant de l'air ou un gaz

Les dimensions de ce volume 4 sont calculées afin d'offrir des limites de détection raisonnables pour un détecteur 2 de type donné, par exemple du type muni de cristaux de 3 pouces. De préférence, ce volume a la forme d'un cône tronqué, entre une petite base et une grande base, la petite base étant tournée vers le détecteur 2, la grande base étant destinée à être tournée vers la surface du fond 103.

Dans le cas d'un cône tronqué, la dimension de la petite base du cône est, de préférence encore, calculée de préférence de sorte que l'ensemble du détecteur 2 soit en vue directe de la source. La face d'entrée du détecteur peut voir l'ensemble de la source ou encore l'ensemble de la surface définie par la grande base du cône.

La face d'entrée du détecteur peut être située en dehors du volume du tronc de cône, du côté de, ou au-dessus de, sa petite base.

La distance entre le détecteur et la petite base du cône tronqué, par exemple la distance entre la face d'entrée de ce détecteur et ladite petite base, peut varier de quelques mm (encore à titre d'exemple : 5 mm ou 10 mm) à quelques centimètres (encore à titre d'exemple : 5 cm ou 8 cm) ; cette distance sera adaptée en fonction de la fabrication retenue et du choix de positionnement du détecteur (verticalement ou horizontalement).

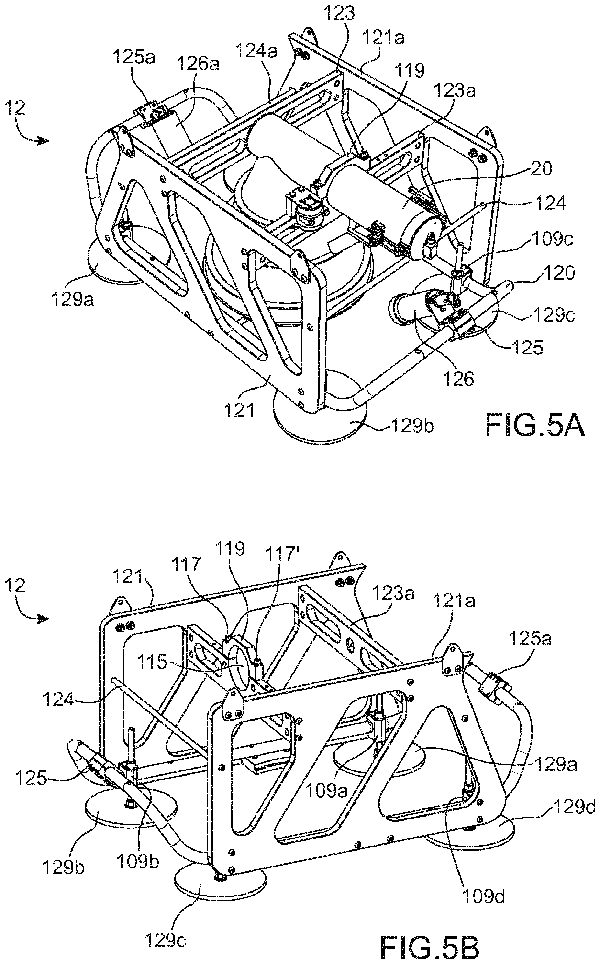

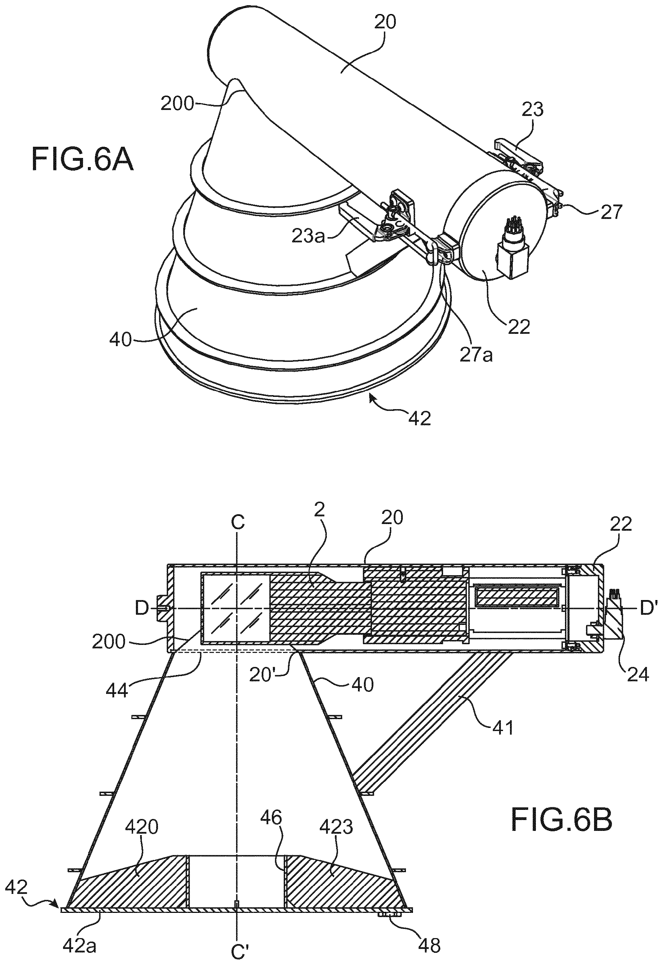

Un exemple de montage horizontal est donné ci-dessous en liaison avec les figures 5A, 6A, 6B ci-dessous. Dans un montage type horizontal, le détecteur s'étend suivant un axe perpendiculaire ou sensiblement perpendiculaire à l'axe du cône (ou du volume contenant un matériau apte à être traversé par un rayonnement à mesurer par le détecteur), qui est vertical ou sensiblement vertical en position d'utilisation.

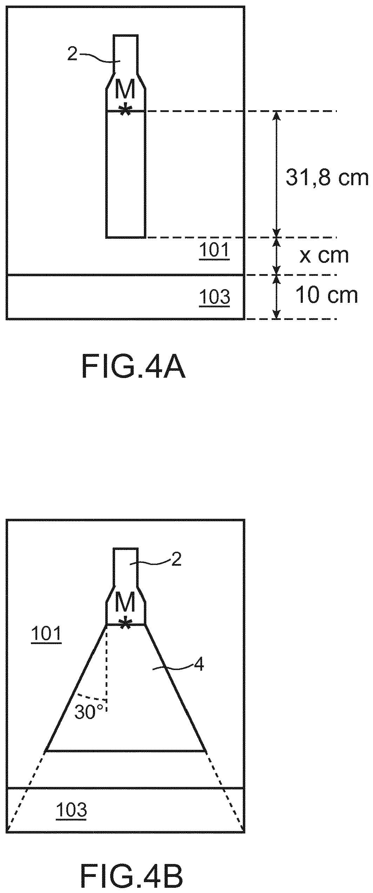

Un exemple de montage vertical est donné ci-dessous en liaison avec la figure 4B ou ci-dessus en liaison avec les figures 1A- 1B. Dans un montage type vertical, le détecteur se situe sur, ou s'étend suivant, le même axe (vertical en position d'utilisation) que le cône (ou que le volume contenant un matériau apte à être traversé par un rayonnement à mesurer par le détecteur).

Le détecteur 2 est un détecteur de rayonnements gamma, par exemple de type Nal, ou Ge, ou encore LaBr. Le détecteur peut avoir une taille de quelques millimètres (c'est le cas, par exemple, d'un CZT) à 3 pouces. Dans le cas d'un détecteur ayant la forme d'un orthocylindre, son diamètre est égal à sa hauteur, par exemple encore 3 pouces.

Le châssis 12 peut être muni de moyens 16, 18 comportant notamment au moins un moteur 16, par exemple électrique ou hydraulique, et des moyens 18 permettant d'assurer la descente et la remontée du dispositif 1, qui vont permettre d'amener l'ensemble constituant le dispositif de mesure 1 à proximité de la surface du fond 103.

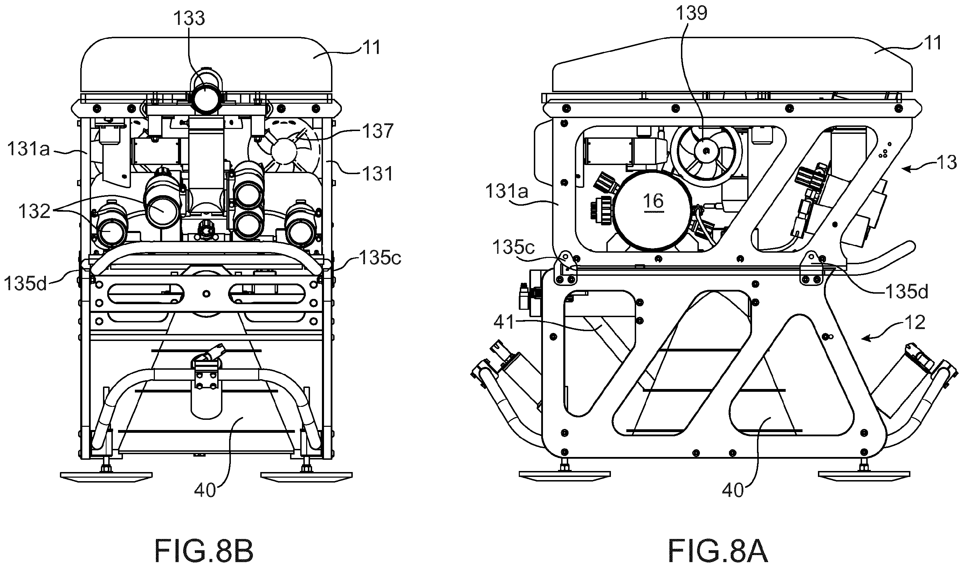

Le châssis 12 peut être fixé sur un véhicule sous-marin télécommandé 13 (dont une réalisation est décrite plus loin en liaison avec les figures 8A-8B), autrement dénommé ROV (pour « Remotely Operated Vehicle »), du commerce, tel que ceux commercialisés par la société ECA HYTEC.

L'ensemble comportant le ROV et le châssis peut en outre être équipé de moyens 14, reliés au dispositif de mesure 1 par un conduit 15 afin de faire circuler un fluide de refroidissement, par exemple de l'azote liquide, destiné à refroidir le détecteur 2, par exemple lorsqu'il est en germanium. En variante, le détecteur germanium peut être équipé d'un cryostat électrique. Comme illustré sur les figures 1A et 1B, ces moyens 14 peuvent être disposés sur un capot 11 qui abrite le reste du système.

L'ensemble comportant le ROV et le châssis est équilibré pour posséder, de préférence, une masse apparente quasi nulle dans le milieu aqueux.

Des moteurs équipent le ROV pour permettre de positionner l'équipement dans son milieu. Sur les figures 8A et 8B, ces moteurs sont désignés par les références 137, 139

Le châssis peut être muni de patins (ils portent les références 129a à 129d sur les figures 5A - 5B), permettant ainsi une éventuelle pose sur le fond si la densité des sédiments le permet. De préférence, des moyens (ils portent les références 109a à 109d sur les figures 5A - 5B), permettent un réglage en hauteur de ces patins.

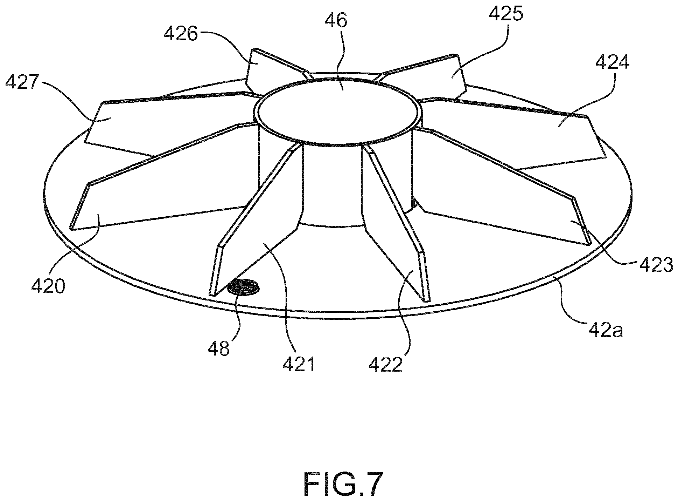

Le dispositif de mesure 1 comprend un cône, ou un tronc de cône, de préférence métallique, calculé pour permettre une résistance à la pression en fonction de la profondeur souhaitée. Des indications ont déjà été données ci-dessus concernant ce cône, qui est préférablement un cône tronqué. La grande base de ce cône, ou fond plat 42a, qui ferme le tronc de cône du côté du milieu à explorer (fond sous marin), peut être renforcée (voir figure 7) par des ailettes 420 à 427 positionnées perpendiculairement à sa surface et s'étendant radialement en reliant une portion tubulaire centrale 46 et la plaque 42a, afin de limiter son épaisseur métallique, nuisible à la détection des rayonnements gamma.

L'épaisseur, de même que la forme, le positionnement et le nombre d'ailettes, pourront être déterminées en fonction de la pression exercée par l'eau sur le cône et, donc, de la profondeur souhaitée.

Par exemple une plaque de 6 mm d'acier peut être suffisante jusqu'à une profondeur de 800 m environ, au lieu des 12 mm normalement nécessaires.

A titre d'exemple, pour une profondeur de 100m, l'augmentation de pression nécessite une augmentation de l'épaisseur du fond de l'ordre de 6 mm d'acier : une telle épaisseur entraînerait l'atténuation du rayonnement gamma du ¹³⁷Cs d'un facteur de l'ordre de 2 (perte de 50% environ) alors que l'emploi d'ailettes fait perdre moins de 5% de la détection.

Le châssis peut en outre être équipé d'un dispositif tel qu'un sonar, et/ou de moyens d'éclairage et/ou de caméras qui vont permettre de localiser, et/ou détecter et/ou visualiser le milieu aqueux et le fond 103.

Ainsi, l'approche du fond peut être assistée par l'usage d'un sonar et/ou au moyen d'une caméra, si les conditions de vision le permettent.

D'une manière générale, on peut :
- soit amener le dispositif de mesure 1 à la distance souhaitée du fond, par exemple à l'aide d'un vérin,
- soit amener le dispositif de mesure 1 avec le ROV 13 portant le châssis 12, ce dernier étant positionné à quelques cm des sédiments à mesurer.

L'ensemble décrit ci-dessous (le ROV, le châssis et les moyens de détection) peut descendre à des profondeurs importantes, par exemple comprises entre 1 m et 100m, ou même supérieures à 100 m, et pouvant se stabiliser à quelques centimètres du fond de l'eau.

Dans une réalisation, illustrée en figures 8A et 8B, le ROV 13 est équipé du châssis 12 boulonné, supportant le dispositif de mesure 1.

Cet ensemble peut être associé à des moyens de positionnement dans l'espace, pour estimer la position du système lorsqu'il est dans l'eau.

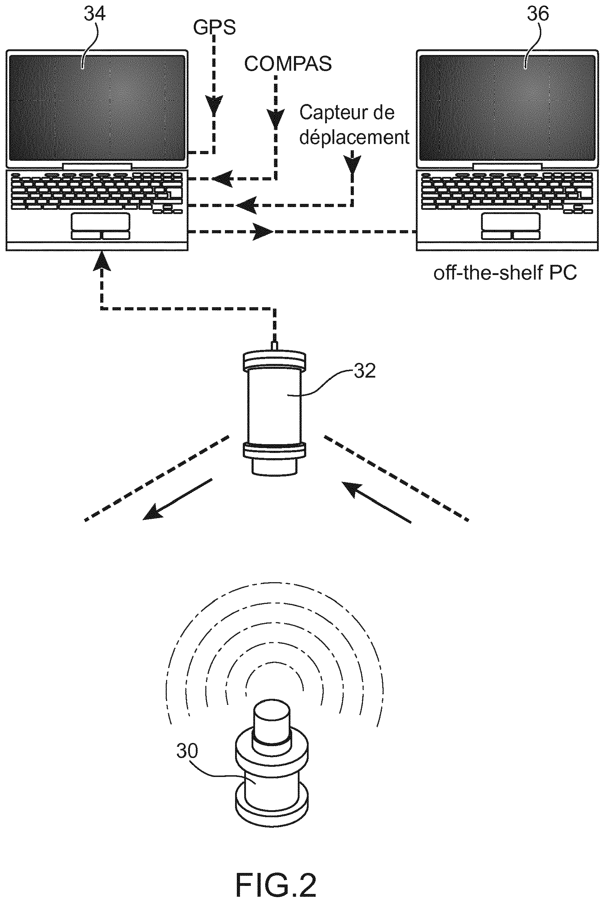

Ainsi, il peut comporter un système de positionnement sous-eau, par exemple de type USBL (Ultra Short Baseline) grand angle, qui peut être couplé à un GPS, afin d'obtenir une géo-localisation de la mesure. Comme illustré en figure 2, un tel système de positionnement peut comporter un transpondeur 30 qui est disposé sur le châssis 12 lorsque celui-ci est introduit dans le milieu aqueux. Ce transpondeur communique, en émission et en réception, avec un émetteur/récepteur 32, disposé en surface, par exemple à bord d'une embarcation ou à terre. Ce dernier va transmettre des données de positionnement et/ou des données, mesurées à l'aide du dispositif détecteur 2, à des moyens 34 de réception, de traitement et de mémorisation des données. De préférence, ces moyens 34 sont de type micro-ordinateur ou ordinateur portable. Ces moyens 34 peuvent être reliés à des moyens de positionnement, de type GPS ou compas ou capteurs de déplacement, pour identifier la position du système de détection 12, 2, 4 lorsque celui-ci est dans un milieu aqueux.

Ces moyens 34 peuvent, à leur tour, être reliés à, ou en communication avec, des moyens 36, qui peuvent être eux aussi de type micro-ordinateur ou ordinateur portable, et auxquels ils vont pouvoir transmettre, par exemple, des données de position et/ou des données de mesure. Ces moyens 34, 36 vont pouvoir élaborer des tableaux de données ou des cartographies du milieu, identifiant les zones contaminées.

Les valeurs des différents points mesurées peuvent ensuite être traitées. Elles peuvent par exemple être reportées sur une carte. Un fichier, par exemple de type Excel, indiquant la date, la position (de préférence avec la précision, par exemple de l'ordre du mètre), la profondeur et l'activité radiologique des sédiments mesurés peut être généré, par exemple par les moyens 36, et être enregistré.

Les valeurs contenues dans ce fichier peuvent ensuite être traitées par un logiciel, par exemple de type "Kartotrack", qui permet d'établir, à l'aide du principe de « krigeage » (réalisation de l'interpolation spatiale d'une variable régionalisée par calcul de l'espérance mathématique d'une variable aléatoire, utilisant l'interpolation et la modélisation du variogramme expérimental), une cartographie radiologique du fond de l'eau.

Il est ainsi possible de réaliser des mesures et une cartographie du fond d'un estuaire, ou dans une piscine de stockage sur un site nucléaire, ou dans une rivière, ou dans une zones de retenue sédimentaire (telles que des barrages, ou des écluses...).

A l'aide de cette information il est ensuite possible de différencier les zones contaminées de celles qui sont non contaminées. Ainsi, on pourra, par exemple, retirer des sédiments actifs, ou bien pomper de l'eau (en vue de la déverser sur un incendie), dans des zones du milieu aqueux où on sait que le sol est non contaminé.

On peut ainsi réaliser une cartographie indicative du fond du milieu aqueux pour en estimer l'activité.

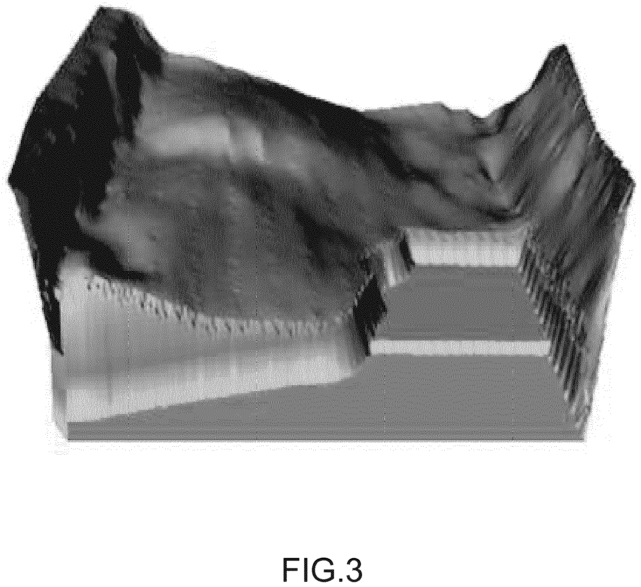

La figure 3 est un exemple de cartographie obtenue. L'activité est plus faible dans les zones les plus claires de cette figure, et plus importante dans les zones plus sombres.

On donne maintenant des exemples de calculs arrondis du signal (valeur vraie mesurée) / bruit (bruit de fond induit par les sédiments alentour) dans une configuration simple montrant l'intérêt de la mise en oeuvre d'un cône d'air.

Les hypothèses de calcul sont les suivantes:
On considère, en tant que source de mesure, des sédiments considérés comme du sable (SiO₂) de masse volumique 1,1 g.cm⁻³.

Cette source a une épaisseur de 10 cm.

Le détecteur retenu pour les mesures a les dimensions suivantes: il s'agit d'un orthocylindre de 3" x 3" (76 mm x 76 mm).

Prenons un rendement intrinsèque d'environ 0,1 c.s⁻¹ / γ.s⁻¹., ce qui constitue une hypothèse plutôt défavorable.

Le radionucléide considéré est le ¹³⁷Cs. L'activité volumique de la source est d'environ 10 Bq.cm⁻³.

On considère un détecteur immergé et une épaisseur d'eau (x) présente entre la base inférieure du cylindre d'air et le fond. Le fond est contaminé sur une épaisseur de 10 cm et peut être considéré comme une surface infinie.

### Exemple 1 :

Cet exemple est illustré en figure 4A. Le détecteur est prolongé par un cylindre d'air d'une hauteur de 15" (38,1 cm environ). Dans cette configuration, la surface de sol visée est de 45 cm².

Si l'on on calcule le débit de fluence au point M situé au centre de la face d'entrée du détecteur, on s'aperçoit que la source de 45 cm² vue sous le détecteur délivre un signal 3 à 4 fois plus important que celui délivré par les sédiments environnant atténués par l'eau. Le rapport signal sur bruit est donc relativement peu favorable. La comparaison entre les valeurs du signal et de la limite de détection pour une distance de mesure données permet de conclure que la réalisation de mesures au moyen d'un cylindre d'air n'aurait peu ou pas de signification dans le cas d'une contamination homogène du sol.

### Exemple 2 :

Les calculs présentés ci-dessus sont repris, mais avec interposition d'un cône 4 d'air sous le détecteur à la place du cyclindre de l'exemple 1. Cet exemple 2 est illustré en figure 4B. L'angle du cône est de 60 degrés. Par rapport au cas précédent, la surface d'entrée du cône, c'est-à-dire sa base, est multipliée par un facteur proche de 100 dans le cas d'une "visée" à conditions équivalentes.

Le rapport signal/bruit évolue alors entre 30 et 40. La mesure obtenue avec interposition du collimateur, ou du cône, 4 peut donc être considérée comme une très bonne estimation de l'activité de la portion de sol placée dans la projection du cône de visée, le reste de la surface de sol contaminée n'ayant que très peu d'impact sur la mesure. L'hypothèse de source infinie offre l'assurance que cette conclusion sera valable quelle que soit la configuration effectivement rencontrée.

Dans de telles conditions, la limite de détection, exprimée en termes d'activité volumique vaudrait entre 0,2 à 0,3 Bq.cm⁻³ déposés dans un tronc de cône dont la surface de la base est définie ci-dessus, et ce, dans un environnement intégralement contaminé à hauteur de 10 Bq.cm⁻³.

Un exemple de réalisation du châssis 12 est illustré en figures 5A et 5B.

En figure 5A, le châssis est muni de l'ensemble de détection comportant le détecteur 2 et le cône d'observation 4. La figure 5B représente le châssis seul, sans les moyens de détection.

Sur ces deux figures, la référence 120 désigne un châssis tubulaire, de forme sensiblement rectangulaire en vue de dessus, mais dont les extrémités des grands côtés sont courbées, de manière à ce que les petits côtés soient, dans une position horizontale du dispositif, à une altitude supérieure aux portions de tube définissant les grands côtés. Ce châssis tubulaire est muni, le long de ses deux grands côtés, de parois latérales 121, 121a, de préférence ajourées, et maintenues l'une par rapport à l'autre à l'aide de traverses 123, 123a et de barres 124, 124a. Les traverses peuvent être avantageusement utilisées pour maintenir le dispositif de mesure lui-même. Ainsi, on voit sur la figure 5A que l'étui qui contient le détecteur 2 vient s'appuyer sur l'une des traverses 123, dans laquelle une ouverture semi-circulaire 115 est prévue pour l'accueillir. Il est maintenu en position contre cette traverse à l'aide d'une bride 119, laquelle définit elle aussi une ouverture semi-circulaire et est elle-même maintenue en position fixe contre la traverse 123 à l'aide de moyens 117, 117' de vissage appropriés. Une extrémité de l'étui peut être fixée contre la traverse 123a. Les petits côtés du châssis tubulaire 120 peuvent être munis de moyens 125, 125a formant support pour un ou plusieurs dispositifs 126, 126a tels qu'une ou plusieurs caméras et/ou un ou plusieurs projecteurs. Le véhicule télécommandé, qui permet de déplacer le châssis, peut être muni d'un câble ombilical permettant, notamment, l'alimentation électrique de ces dispositifs 126, 126a et les échanges de données, fournies par le détecteur 2 et les autres dispositifs, avec les moyens 34 (figure 2) disposés en surface. L'ensemble du châssis repose sur des pieds 129a - 129d qui permettent de disposer le châssis sur une surface horizontale. Chacun de ces pieds, de préférence réglables en hauteur, peut être relié au châssis tubulaire 120 par des moyens 109a-109d formant amortisseurs, destinés à permettre une stabilisation amortie de l'ensemble du système lorsque celui-ci est amené en position contre une surface horizontale.

Des plaques de liaison 135a-135d peuvent être fixées dans la partie supérieure des parois latérales, en vue de fixer un élément supérieur, tel que le ROV, comme décrit plus loin en liaison avec les figures 8A-8B.

Les figures 6A et 6B représentent, respectivement en perspective, et selon une coupe longitudinale, l'ensemble comportant l'étui 20, destiné à contenir le détecteur lui-même. Cet étui est de forme cylindrique ou sensiblement cylindrique ; il comporte en outre une ouverture latérale 20' qui va permettre à une surface sensible du détecteur de capter le rayonnement à mesurer.

L'étui 20 est associé, à l'une de ses extrémités, à un tronc de cône 40, qui va servir de collimateur pour le rayonnement à mesurer. Ce tronc de cône présente une grande base 42 et une petite base 44 (cette dernière est symbolisée, en figure 6B, par une ligne en traits interrompus). La grande base est fermée, de manière étanche, par une plaque 42a, dont un mode de réalisation est décrit plus en détail ci-dessous. La petite base est ouverte, afin de communiquer avec l'intérieur de l'étui 20, par l'ouverture latérale 20' de celui-ci. Le diamètre de cette ouverture latérale 20' est sensiblement égal au diamètre de la petite base 44.

Comme déjà indiqué ci-dessus, la dimension de la petite base du cône tronqué est, de préférence, calculée de sorte que l'ensemble du détecteur soit en vue directe de la source.

On a également donné, ci-dessus, des indications concernant la distance pouvant être choisie entre le détecteur et la petite base du cône, indications qui peuvent s'appliquer notamment au présent exemple de réalisation.

Le détecteur 2 peut être introduit dans l'étui 20 par l'une de ses extrémités amovibles 22, laquelle est ensuite refermée, et maintenue dans cette position à l'aide de moyens 23, 23a, 27, 27a, par exemple des fermetures de type à grenouillère. La référence 24 désigne des moyens de connexion électrique qui vont permettre de relier le détecteur à des moyens de réception, de stockage et de traitement des données, disposés par exemple en surface ou à bord d'une embarcation.

De préférence, le tube 20 et le cône 40 sont soudés l'un à l'autre par une zone 200 définie, dans l'espace, par l'intersection du tronc de cône 40 et du cylindre 20, de sorte que l'ouverture formée par la petite base 44 communique avec l'ouverture latérale 20' de l'étui. Eventuellement, afin de renforcer l'assemblage, une barre de liaison 41 peut être prévue, afin de relier l'autre extrémité de l'étui 20 et une partie basse ou médiane du cône 40.

L'ensemble constituant le tube 20 et le cône 40 est étanche, l'étanchéité étant assurée par exemple au moyen de doubles joints toriques.

On voit que l'axe longitudinal de l'étui 20 et du détecteur 2 est sensiblement perpendiculaire à l'axe de révolution CC' du tronc de cône.

Le détecteur peut avoir la forme d'un orthocylindre. Le détecteur est de toute manière, de préférence, entièrement englobé par le prolongement du tronc de cône (notamment dans le cône qui prolonge ce dernier); en particulier, selon un exemple de réalisation, la face du détecteur qui est parallèle à la petite base 44 et celle qui est perpendiculaire à la petite base sont contenues dans le prolongement du tronc de cône.

Dans la partie inférieure de la figure 6B et en figure 7 est représentée la plaque 42a qui vient fermer la grande base 42 du tronc de cône 40. Le cône est soudé à cette plaque et subit une épreuve de pression en fonction de la profondeur pour laquelle il est conçu. Cette plaque a une forme circulaire et est munie d'ailettes qui, comme déjà expliqué ci-dessus, permettent de renforcer la tenue de la plaque 42a à la pression et de maintenir son épaisseur à une valeur compatible avec la mesure effectuée. Le cône est de préférence en acier inoxydable. La plaque 42a peut en outre être munie d'un moyen 48 formant capteur d'eau. Un cylindre ou une portion tubulaire 46, disposée sensiblement perpendiculairement à la grande base, permet de rigidifier l'ensemble en limitant le nombre de soudures en un même point.

Selon un exemple de réalisation, l'étui 2 a un diamètre d'environ 8,5 cm, une longueur d'environ 50 cm tandis que le diamètre de la grande base 42 est d'environ 38 cm, le diamètre de la petite base 44 est d'environ 10 cm, et la distance entre cette grande base et l'axe DD' est d'environ 34 cm.

Une réalisation de l'ensemble comportant le ROV et le châssis est illustrée en figures 8A et 8B. Le ROV 13 comporte des parois latérales 131, 131a qui ont sensiblement la même forme que les parois 121, 121a du châssis déjà décrit. En particulier, les parois 131, 131a sont de préférence ajourées.

Cette partie supérieure est surmontée par un capot 11, et peut abriter des moyens d'éclairage 132, 133, un moteur électrique et/ou hydraulique 16, un ou plusieurs moteurs 137, 139.

Le ROV 13 peut être relié au châssis inférieur 12 par les plaques de liaison 135a-135d déjà mentionnées ci-dessus. Ces plaques sont fixées d'une part aux parois latérales du châssis inférieur, d'autre part aux parois latérales du ROV.

Selon une réalisation préférée, un dispositif selon l'invention permet une détection non isotrope, puisque dirigée vers le fond sous-marin. On ne réalise alors pas une détection sur le pourtour, ou sur l'ensemble du pourtour, de l'ensemble du dispositif, ou on ne réalise pas une détection selon une direction non dirigée vers le fond sous-marin.

## Revendications

1. Dispositif (1) pour la mesure de l'activité radiologique dans un fond sous-marin, comportant un étui étanche (20) pour un détecteur radiologique (2), ledit dispositif étant **caractérisé en ce qu'**il comporte des moyens (4) formant un cône tronqué de volume fermé, contenant un matériau apte à être traversé par un rayonnement à mesurer par ledit détecteur radiologique (2), comportant une petite base (44) et une grande base (42), et formant une face d'entrée (42) du rayonnement à mesurer, ce cône étant assemblé audit étui de manière étanche, la petite base (44) étant disposée du côté de l'étui, la grande base (42) étant destinée à être disposée en regard du fond sous marin.

2. Dispositif selon la revendication 1, ledit matériau étant un gaz ou un matériau solide de faible densité qui emprisonne ledit gaz.

3. Dispositif selon la revendication 2, le matériau solide ayant une masse volumique inférieure à 0,1g.cm⁻³.

4. Dispositif selon l'une des revendications 1 à 3, la grande base (42) du cône tronqué étant fermée par une plaque (42a) comportant une portion centrale délimitée par une portion tubulaire (46), disposée sensiblement perpendiculairement à la grande base, et des ailettes (420-427) s'étendant radialement en reliant la portion tubulaire (46) et ladite plaque (42a).

5. Dispositif selon l'une des revendications 1 à 4, l'angle du cône tronqué (4) étant compris entre 15° et 75°, de préférence de l'ordre de 60°.

6. Dispositif selon l'une des revendications 1 à 5, l'étui (20) s'étendant le long d'un axe (DD') sensiblement perpendiculaire à l'axe de révolution (CC') du cône tronqué (4).

7. Système pour la mesure de l'activité radiologique dans un fond d'un milieu aqueux, comportant :
- un châssis (12) destiné à être immergé dans ledit milieu aqueux,
- un dispositif de mesure selon l'une des revendications 1 à 6.

8. Système selon la revendication 7, comportant en outre des moyens (126, 126a) d'éclairage du milieu aqueux et du fond de ce milieu aqueux et/ou au moins une caméra (126, 126a) pour filmer le milieu aqueux et le fond de ce milieu aqueux.

9. Système selon l'une des revendications 7 ou 8, le châssis (12) comportant des parois latérales (121, 121a) ajourées.

10. Système selon l'une des revendications 7 à 9, le châssis (12 comportant des moyens (115, 117, 119) pour fixer, de manière amovible, le dispositif de mesure par rapport au châssis et/ou le système comportant en outre des moyens (16, 18) pour déplacer le dispositif de mesure par rapport au châssis (12).

11. Système selon l'une des revendications 7 à 10, comportant en outre des moyens (30, 32, 34) pour estimer une position du châssis par rapport au fond marin et/ou des moyens (36) pour établir une carte de l'activité radiologique dudit fond marin, et/ou le châssis comportant en outre des moyens (109a-109d, 129a-129d) pour positionner le système sur le fond du milieu aqueux.

12. Système selon l'une des revendications 7 à 11, comportant en outre un véhicule télécommandé (13).

13. Procédé de mesure de l'activité radiologique dans un fond (103) d'un milieu aqueux (101), comportant :
- l'introduction, dans le milieu aqueux, d'un dispositif selon l'une des revendications 1 à 6 ou d'un système selon l'une des revendications 7 à 12,
- la mesure de l'activité radiologique à l'aide du dispositif de mesure, la grande base (42) du cône tronqué étant approchée du fond du milieu aqueux.

14. Procédé selon la revendication 13, comprenant en outre la réalisation de la carte de l'activité radiologique du fond du milieu aqueux.

15. Procédé selon l'une des revendications 13 et 14, le milieu aqueux (101) étant un lac, ou une mer ou une rivière, ou un estuaire, ou encore une piscine de stockage sur un site nucléaire, ou une zone de retenue sédimentaire.

## Patentansprüche

1. Vorrichtung (1) zum Messen der radiologischen Aktivität auf einem Meeresboden, enthaltend eine abgedichtete Tasche (20) für einen Röntgensensor (2), wobei die Vorrichtung **dadurch gekennzeichnet ist, dass** sie enthält:
Mittel (4), die einen Kegelstumpf mit geschlossenem Volumen bilden, der ein Material beinhaltet, das dazu geeignet ist, von einer Strahlung durchsetzt zu werden, die von dem Röntgensensor (2) zu messen ist, und der eine Deckfläche (44) und eine Grundfläche (42) aufweist und eine Eintrittsfläche (42) für die zu messende Strahlung bildet, wobei dieser Kegel mit der Tasche in abgedichteter Weise zusammengefügt ist, wobei die Deckfläche (44) auf der Seite der Tasche angeordnet ist und wobei die Grundfläche (42) dazu bestimmt ist, dem Meeresboden gegenüberliegend angeordnet zu werden.

2. Vorrichtung nach Anspruch 1, wobei das Material ein Gas oder ein Feststoff mit geringer Dichte ist, der das Gas einschließt.

3. Vorrichtung nach Anspruch 2, wobei der Feststoff eine Dichte von unter 0,1 g.cm⁻³ hat.

4. Vorrichtung nach einem der Ansprüche 1 bis 3, wobei die Grundfläche (42) des Kegelstumpfs von einer Platte (42a) verschlossen wird, die einen Mittelabschnitt aufweist, der von einem rohrförmigen Abschnitt (46) eingegrenzt wird und im Wesentlichen senkrecht zur Grundfläche angeordnet ist, sowie Flügel (420 - 427), die sich radial erstrecken und dabei den rohrförmigen Abschnitt (46) und die Platte (42a) verbinden.

5. Vorrichtung nach einem der Ansprüche 1 bis 4, wobei der Winkel des Kegelstumpfs (4) zwischen 15° und 75° beträgt und vorzugsweise in der Größenordnung von 60° liegt.

6. Vorrichtung nach einem der Ansprüche 1 bis 5, wobei die Tasche (20) sich entlang einer Achse (DD') erstreckt, die im Wesentlichen senkrecht zur Umlaufachse (CC') des Kegelstumpfs (4) verläuft.

7. System zum Messen der radiologischen Aktivität auf einem Boden eines wässrigen Mediums, enthaltend:
- ein Gestell (12), das dazu bestimmt ist, in das wässrige Medium eingetaucht zu werden,
- eine Messvorrichtung nach einem der Ansprüche 1 bis 6.

8. System nach Anspruch 7, ferner enthaltend Leuchtmittel (126, 126a) zum Ausleuchten des wässrigen Mediums und des Bodens dieses wässrigen Mediums und/oder zumindest eine Kamera (126, 126a) zum Filmen des wässrigen Mediums und des Bodens dieses wässrigen Mediums.

9. System nach einem der Ansprüche 7 oder 8, wobei das Gestell (12) durchbrochene Seitenwände (121, 121 a) aufweist.

10. System nach einem der Ansprüche 7 bis 9, wobei das Gestell (12) Mittel (115, 117, 119) enthält, um die Messvorrichtung bezüglich des Gestells abnehmbar zu befestigen und/oder wobei das System ferner Mittel (16, 18) zum Verlagern der Messvorrichtung bezüglich des Gestells (12) aufweist.

11. System nach einem der Ansprüche 7 bis 10, ferner enthaltend Mittel (30, 32, 34) zum Abschätzen einer Position des Gestells bezüglich des Meeresbodens und/oder Mittel (36) zum Erstellen einer Karte über die radiologische Aktivität des Meeresbodens und/oder wobei das Gestell ferner Mittel (109a - 109d, 129a - 129d) enthält, um das System auf dem Boden des wässrigen Mediums zu positionieren.

12. System nach einem der Ansprüche 7 bis 11, ferner enthaltend ein ferngesteuertes Fahrzeug (13).

13. Verfahren zum Messen der radiologischen Aktivität auf einem Boden (103) eines wässrigen Mediums (101), umfassend:
- Einführen einer Vorrichtung nach einem der Ansprüche 1 bis 6 oder eines Systems nach einem der Ansprüche 7 bis 12 in das wässrige Medium,
- Messen der radiologischen Aktivität mit Hilfe der Messvorrichtung, wobei die Grundfläche (42) des Kegelstumpfs dem Boden des wässrigen Mediums angenähert ist.

14. Verfahren nach Anspruch 13, ferner umfassend das Erstellen der Karte über die radiologische Aktivität am Boden des wässrigen Mediums.

15. Verfahren nach einem der Ansprüche 13 und 14, wobei das wässrige Medium (101) ein See oder ein Meer oder ein Fluss oder eine Mündung oder auch ein Lagerbecken an einem Nuklearstandort oder ein sedimentärer Rückhaltebereich ist.

## Claims

1. Device (1) for measurement of the radiological activity in the bottom of an aqueous medium, comprising a sealed case (20) for a radiological detector (2), said device being **characterized in that** it comprises: means (4) forming a truncated cone containing a material that allows radiation to be measured by said radiological detector (2) to pass through it, comprising a short base (44) and a long base (42), the long base forming an input face (42) for the radiation to be measured, this cone being assembled to said case in a sealed manner, the short base (44) being placed on the side of the detector input face, and the long base (42) being designed to be placed facing the bottom of the aqueous medium.

2. Device according to claim 1, said material being a gas or a low density solid material that traps said gas.

3. Device according to claim 2, the solid material having a density less than 0.1 g.cm⁻³.

4. Device according to one of claims 1 to 3, the long base (42) of the truncated cone being closed by a plate (42a) comprising a central portion delimited by a tubular portion (46), arranged approximately perpendicular to the long base, and fins (420-427) extending radially connecting the tubular portion (46) and said plate (42a).

5. Device according to one of claims 1 to 4, the angle of the truncated cone (4) being between 15° and 75°, and preferably of the order of 60°.

6. Device according to one of claims 1 to 5, the case (20) extending along an axis (DD') approximately perpendicular to the axis of revolution (CC') of the truncated cone (4).

7. System for measurement of the radiological activity at the bottom of an aqueous medium comprising:
- a frame (12) that will be immersed in said aqueous medium,
- a measurement device according to one of claims 1 to 6.

8. System according to claim 7, also comprising means (126, 126a) of illuminating the aqueous medium and the bottom of this aqueous medium and/or at least one camera (126, 126a) to film the aqueous medium and the bottom of this aqueous medium.

9. System according to one of claims 7 or 8, the frame (12) comprising perforated side walls (121, 121a).

10. System according to one of claims 7 to 9, the frame (12) comprising means (115, 117, 119) for removably fixing the measurement device relative to the frame and/or the system comprising means (16, 18) for displacing the measurement device relative to the frame (12).

11. System according to one of claims 7 to 10, also comprising means (30, 32, 34) for estimating a position of the frame relative to the bottom of the aqueous medium and/or means (36) for producing a map of the radiological activity of the bottom of this aqueous medium and/or means (109a-109d, 129a-129d) for positioning the system on the bottom of the aqueous medium.

12. System according to one of claims 7 to 11, also comprising a remote-controlled vehicle (13).

13. Method of measuring the radiological activity in the bottom (103) of an aqueous medium (101), comprising:
- introduction of a device according to one of claims 1 to 6 or a system according to one of claims 7 to 12, into the aqueous medium,
- measurement of the radiological activity using the measurement device, the long base (42) of the truncated cone being brought close to the bottom of the aqueous medium.

14. Method according to claim 13, also comprising the production of a map of the radiological activity of the bottom of the aqueous medium.

15. Method according to one of the claims 13 or 14, the aqueous medium (101) being a lake, a sea or a river, or an estuary, or a storage pool on a nuclear site, or a sedimentary retention zone.
